# EUROPÄISCHE PATENTSCHRIFT

(11) **EP 3 978 108 B1**
(45) Veröffentlichungstag und Bekanntmachung des Hinweises auf die Patenterteilung: **28.08.2024**
(21) Anmeldenummer: 21200422.0
(22) Anmeldetag: 01.10.2021
(51) Int. Cl.: B01F 25/431, B33Y 80/00

(54) **EINSTÜCKIGER STATISCHER MISCHER SOWIE VERFAHREN ZU SEINER HERSTELLUNG**
SINGLE-PIECE STATIC MIXER AND METHOD FOR PRODUCING THE SAME
MÉLANGEUR STATIQUE MONOBLOC, AINSI QUE SON PROCÉDÉ DE FABRICATION

(30) Priorität: 05.10.2020 DE 202020105691 U
(43) Veröffentlichungstag der Anmeldung: 06.04.2022
(73) Patentinhaber: SCHEUGENPFLUG GmbH, 93333 Neustadt/Donau (DE)
(72) Erfinder: Böhm, Ulrich, 92342 Freystadt (DE); Müller, Harald, 85084 Ingolstadt (DE)
(74) Vertreter: Weickmann & Weickmann PartmbB

(56) Entgegenhaltungen:
- EP-A1- 2 711 163
- EP-A1- 3 173 157
- EP-B1- 1 888 215
- WO-A1-2007/110316
- WO-A1-92/11928
- DE-T2- 60 005 953
- DE-U1- 202018 106 654
- US-A- 4 466 741
- US-A1- 2017 291 151
- US-A1- 2019 076 800
- BERTSCH A ET AL: "3D micromixers-downscaling large scale industrial static mixers", 25 January 2001, PROCEEDINGS OF THE IEEE 14TH. ANNUAL INTERNATIONAL CONFERENCE ON MICRO ELECTRO MECHANICAL SYSTEMS. MEMS 2001. INTERLAKEN, SWITZERLAND, JAN. 21 - 25, 2001; [IEEE INTERNATIONAL MICRO ELECTRO MECHANICAL SYSTEMS CONFERENCE], NEW YORK, NY : IEEE, US, PAGE, ISBN: 978-0-7803-5998-7, XP032403404
- THINGIVERSE.COM: "Static Mixer for 2 part epoxy by Chunkmunk01 - Thingiverse", 17 February 2018 (2018-02-17), pages 1 - 4, XP055875474, Retrieved from the Internet <URL:https://www.thingiverse.com/thing:2797475> [retrieved on 20211222]

## Beschreibung

### I. Anwendungsgebiet

Die Erfindung betrifft einen statischen Mischer, also einen Mischer mit im Hüllrohr stillstehendem Mischer-Einsatz, zum Mischen zweier fließfähiger, pastöser Komponenten zu einer homogenen Masse auf ihrem Weg in Längsrichtung durch das Hüllrohr des Mischers.

### II. Technischer Hintergrund

Um ein möglichst fein verteiltes Durchmischen zu erreichen, besitzt der Mischer-Einsatz eine Vielzahl von teilweise sehr komplex geformten und angeordneten Strömungshindernissen.

Dabei besteht das Ziel grundsätzlich darin, einerseits eine möglichst gute Durchmischung der beiden pastösen Komponenten zu erreichen, andererseits den Strömungswiderstand, den der Mischer-Einsatz darstellt, möglichst gering zu halten.

Denn vor allem dann, wenn sehr kleine, exakt vorgegebene Mengen des gemischten Produkts ausdosiert werden sollen, ist es entscheidend, dass der statische Mischer auch im Betrieb, in dem er oftmals unter einem Druck von mehr als 40 bar steht, seine Form beibehält, denn wenn durch diesen Druck beispielsweise das Hüllrohr seinen Innendurchmesser vergrößert und bei nachlassendem Druck wieder verkleinert, ist eine Ausbringung exakter Volumina schwer zu realisieren.

Da für eine optimale Durchmischung die Mischer-Einsätze teilweise sehr kompliziert geformt sind, wurden sie in der Vergangenheit immer separat vom Hüllrohr hergestellt und anschließend in das Hüllrohr eingebracht, wobei der Mischer-Einsatz teilweise so kompliziert geformt war, dass er entweder aus mehreren Teilen hergestellt und zusammengesetzt werden musste oder durch ein Gießverfahren, evtl. sogar mit verlorener Form, hergestellt werden musste, vor allem wenn der Mischer-Einsatz aus Metall bestehen sollte. Dies treibt die Kosten für Herstellung und Montage des Mischers enorm in die Höhe.

Nachdem durch iterative Herstellungsverfahren, wie den 3D-Druck inzwischen die Herstellung von im Spritzgussverfahren mittels umgebender Form nicht realisierbarer Strukturen von Mischer-Einsätzen möglich war, ist es bekannt, den Mischer-Einsatz in einem Stück und mittels des 3D-Drucks herzustellen, wie beispielsweise aus der EP 3495036 A1 bekannt.

Des Weiteren hat sich als grundsätzlich gut geeignete Gestaltung eines Mischer-Einsatzes für statische Mischer über Jahrzehnte eine Grundform erwiesen, die als X-GRID-Struktur bezeichnet wird, welche erstmals wohl in der CH 642564 A1 beschrieben wurde. Dabei besteht der Mischer-Einsatz im Hüllrohr aus mehreren, sich in Längsrichtung des Hüllrohres, der axialen Richtung, aneinander anschließenden Misch-Elementen, von denen jedes zwei Gruppen von - in der klassischen X-GRID-Struktur jeweils zueinander parallelen -Diagonal-Streben umfasst, die jeweils eine Ebene definieren.

Die beiden Ebenen schneiden sich in einer Kreuzungsgeraden, und entlang dieser Kreuzungsgeraden folgt auf eine Diagonal-Strebe der ersten Gruppe jeweils eine Diagonal-Strebe der zweiten Gruppe, die dort jeweils miteinander verbunden sind. Die Kreuzungsgerade erstreckt sich quer zur Längsrichtung des Hüllrohres durch dieses hindurch, meist lotrecht zu dessen axialer Richtung.

Die in axialer Richtung aufeinanderfolgenden Misch-Elemente sind in dieser axialen Richtung betrachtet mit zueinander in einem Winkel, meist von 90°, stehenden Kreuzungsgeraden zweier aufeinander folgender Misch-Elemente angeordnet.

Wegen der hohen Herstellkosten im Spritzguss-Verfahren war es in der Vergangenheit teilweise sogar üblich, ein solches X-Mischelement - besonders wenn es aus Metall bestehen sollte - nicht einsteilig im Spritzguss herzustellen, sondern aus einzelnen Diagonal-Streben zusammenzusetzen, die dann - manuell oder teil-automatisiert - miteinander verschweißt wurden, für die Verbesserung der Stabilität beispielsweise mit Verbindungsklammern zwischen den einzelnen Diagonal-Streben.

Auch dieses Herstellungs-Verfahren erforderte, dass die Form der Diagonal-Streben und deren Anordnung so gewählt wurde, dass sie noch zusammengesetzt und miteinander verschweißt werden konnten.

Dadurch war jedoch einerseits eine optimale Durchmischung ergebende X-GRID-Strukturen nicht erreichbar und andererseits konnten sehr kleine X-Mischelemente, wie sie für Dosiermengen in der Größenordnung von deutlich unter 1 ml notwendig sind, nicht hergestellt werden.

Nicht gerade, also gebogene, Kreuzungslinien, entlang der sich die Diagonal-Streben der beiden Gruppen von Diagonal-Streben eines X-Elementes kreuzen und miteinander verbunden sind, waren damit ebenso wenig möglich wie eine Veränderung des bei Seitenansicht betrachteten Winkels der Kreuzungsgeraden zur Längsrichtung oder nicht gerade, geschwungene Diagonal-Streben oder Kreuzungslinien oder Diagonal-Streben, die in ihrem Verlauf ihren Querschnitt ändern.

Je nach Herstellungsverfahren werden benachbarte Misch-Elemente über die äußeren Enden ihrer Diagonal-Streben miteinander verbunden oder nicht, was sowohl die Stabilität des fertigen Mischer-Einsatzes als auch dessen MontageMöglichkeiten im Hüllrohr beeinflusst.

Die US 4,466,741 zeigt ein an beiden Enden offenes, flanschloses Rohr mit darin spiralig laufendem, einstückig ausgebildetem Mischer-Einsatz.

In der DE 20 2018 106 654 U1 ist ein Befestigungsflansch des Hüllrohrs nicht einstückig mit dem Mischer-Einsatz verbunden und enthält lediglich gerade verlaufende Zuflüsse.

Die EP 3 173 157 A1 offenbart einen statischen Mischer entsprechend dem Oberbegriff des Anspruchs 1 und zeigt einen Flansch, der einstückig mit dem Hüllrohr als auch dem Boden der beiden Spritzen im 3D-Druck-Verfahren hergestellt ist, aber die Verbindungskanäle zwischen den beiden Spritzen und dem Inneren des Mischers verlaufen in axialer Richtung des Mischers insgesamt gerade.

### III. Darstellung der Erfindung

### a) Technische Aufgabe

Es ist daher die Aufgabe gemäß der Erfindung, den Mischer, der den zugeführten Komponenten einen Drall gibt, stabiler zu gestalten trotz einfacherem und kostengünstigerem Herstellverfahren.

### b) Lösung der Aufgabe

Diese Aufgabe wird durch die Merkmale der Ansprüche 1 und 15 gelöst Vorteilhafte Ausführungsformen ergeben sich aus den Unteransprüchen.

Hinsichtlich des Mischers wird diese Aufgabe durch einen Mischer entsprechend Anspruch 1 gelöst. Der Mischer-Einsatz und das umgebende Hüllrohr, insbesondere der gesamte statische Mischer, ist einstückig ausgebildet und besteht vorzugsweise aus Kunststoff, alternativ aus Metall.

Durch die einstückige Herstellung von Mischer-Einsatz und umgebenden Hüllrohr wird durch die Verbindungsstellen zwischen diesen beiden Bauteilen der statische Mischer insgesamt sehr stabiler, da die Durchmesser-Vergrößerung, das sogenannte "Atmen", des Hüllrohres im druckbelasteten Betrieb durch die Verbindung mit dem im freien inneren Durchmesser einstückig angebundenen Mischer-Einsatz reduziert wird.

Durch Anzahl und Auswahl der einstückigen Verbindungsstellen zwischen Mischer-Einsatz und umgebenden Hüllrohr können auch divergierende Ziele wie Stabilität des Mischers einerseits und geringer Strömungswiderstand andererseits nach Bedarf eingestellt werden.

Das einstückige Herstellen erfolgt dabei mittels eines iterativen also durch sich wiederholende Schritte, insbesondere schichtweise, durchgeführten Herstellungsverfahrens, etwa des 3D-Druckes, wodurch auch komplizierte und insbesondere hinterschnittene Strukturen hergestellt werden können, die im Spritzgießen in eine Form nicht oder nur mit sehr hohem Aufwand hinsichtlich der Gestaltung der Form mittels einer Vielzahl beweglicher Formteile, sogenannter Schieber, möglich wäre.

Dadurch werden die Herstellkosten drastisch gesenkt, wobei klargestellt sein sollte, dass im Spitzguss-Verfahren hergestellte Mischer-Einsätze, insbesondere, wenn sie aus Metall gespritzt sind, pro Stück mehrere Tausend Euro kosten können, trotz einer Größe von nur wenigen Zentimetern. Durch Herstellung in einem iterativen Herstell-Verfahren kann sich dieser Betrag um den Faktor 100 oder gar 1000 reduzieren.

Ferner hat es sich in der Praxis gezeigt, dass das Verbinden der, meist radial außenliegenden, Enden der Diagonal-Streben mit dem Hüllrohr zwar die Stabilität des Mischers verbessert, aber teilweise auch die Durchmischung verschlechtern kann.

Deshalb ist es erfindungsgemäß sinnvoll, dass wenigstens ein Teil der Diagonal-Streben beabstandet zum Innenumfang des umgebenden Hüllrohres in einem geringen Abstand - maximal 2 mm, besser maximal 1 mm - endet, sodass dazwischen noch Material in axialer Richtung hindurchströmen kann.

Vorzugsweise werden deshalb die Diagonal-Streben vorzugsweise nur mit denjenigen Enden einstückig mit dem umgebenden Hüllrohr verbunden, die primär entgegen der generellen Durchströmungsrichtung durch das durch den Mischer von der Einlassseite zur Auslassseite gerichtet sind, da sich dann der generellen Strömungsrichtung entgegenweisend keine Innenecken mit einem Innenwinkel vom 90° oder weniger zu befürchten sind oder bewirkt werden.

Vorzugsweise sind diese nicht mit dem Hüllrohr verbundenen Enden der Diagonal-Streben auch mit keinem anderen Bauteil verbunden, auch nicht mit einem anderen Element wie etwa einer anderen Diagonal-Strebe eines anderen Misch-Elementes, insbesondere X-Elementes.

Ferner hat es sich als sinnvoll erwiesen, dass bei axialer Betrachtung die Breiten der Diagonal-Streben, also gemessen quer zu ihrer in dieser axialen Betrachtung sichtbaren Haupterstreckungsrichtung, bei zwei sich kreuzenden Gruppen von Streben in der Summe der Breiten über beide Gruppen diese Summe größer ist als 95% des in der Breitenrichtung gemessenen inneren freien Durchmessers des Hüllrohres, obwohl man vermuten könnte, dass dies den Strömungswiderstand drastisch erhöht.

Es sollte an dieser Stelle auch festgehalten werden, dass ein X-GRID-Element auch mehr als zwei Gruppen von Diagonal-Streben aufweisen kann, beispielsweise, indem es auch mehr als eine Kreuzungslinie besitzt.

Dann könnten bei beispielsweise entsprechend steiler Ausrichtung der Ebenen oder Flächen, die durch die Diagonal-Streben einer Gruppe definiert werden, keine voneinander unterscheidbaren Mischelemente mehr vorhanden sein, indem beispielsweise jede Gruppe mit zwei anderen, die eigene Gruppe kreuzenden, etwa parallel liegenden zwei Gruppen verbunden sein, was allerdings das "Verdrehen" der Verbindungslinien um die Längsachse erschwert.

Für eine optimale Durchmischung sollten die Zufluss-Mündungen im Zufluss-seitigen Ende des Hüllrohres, welches hier oberes Ende genannt wird, aufgrund der meist hängenden Montage eines statischen Mischers, an der gleichen Axial-Position angeordnet sein, um für die beiden Komponenten - es können auch mehr als zwei Komponenten in einem statischen Mischer gemischt werden - den gleichen Strömungsweg von der Einlassseite zur Auslassseite des Mischers zur Verfügung zu stellen.

An gleicher Axial-Position soll bedeuten, dass die Axial-Position der beiden Zufluss-Mündungen in absoluten Zahlen um höchstens 3 mm, besser höchstens 2 mm, besser höchstens 1 mm differiert bzw. in relativen Werten um höchsten 3 %, besser höchstens 2 %, besser höchstens 1 % der inneren freien Länge des Hüllrohres differieren.

Um dies einzuhalten können im Anfangsbereich des Hüllrohres, insbesondere dessen stirnseitiger Verschlussplatte, kompliziert geformte Kanäle vom Einlass in das Hüllrohr bis zur Zufluss-Öffnung in den freien Innenraum des Hüllrohres notwendig sein oder bevorzugt sein, beispielsweise ein gewendelter Kanal, um der zugeführten Komponente einen Drall bzgl. der axialen Richtung mitzugeben, was jedoch mit einem iterativen Herstellverfahren herstellbar ist.

Weiterhin hat es sich als positiv erwiesen, die Diagonal-Streben entlang ihrer größten Erstreckungsrichtung gekrümmt auszuführen, insbesondere mit ab ihrem Verbindungsbereich zu einer benachbarten Diagonal-Strebe mit gegenläufigen Krümmungen, wobei die Krümmung zu den benachbarten Diagonal-Streben der gleichen Gruppe hin gerichtet sein kann oder lotrecht zu der Fläche, in der die Diagonal-Streben einer Gruppe angeordnet sind.

Wenn von geometrischen Linien bzgl. der Diagonal-Streben und insbesondere deren Verlaufsrichtung die Rede ist, so sollte klargestellt sein, dass die auf eine Linie reduzierte Erstreckungsrichtung einer Diagonal-Strebe an jeder Stelle ihrer Haupterstreckungsrichtung durch die geometrische Mitte, insbesondere den Schwerpunkt, ihres Querschnittes verläuft.

Vorzugsweise ist diese Fläche, in der die Diagonal-Streben einer Gruppe angeordnet sind, keine ebene, sondern eine gewölbte Fläche, vorzugsweise eine sphärische Fläche, die in einer oder auch zwei Richtungen gekrümmt sein kann und vorzugsweise mit dem stromaufwärts der Kreuzungslinie liegende Bereich entgegen der generellen Durchströmungsrichtung konvex gekrümmt ist, stromabwärts davon entweder konvex oder konkav gekrümmt ist.

Ebenso hat es sich als günstig erwiesen, die Diagonal-Streben einer Gruppe nicht parallel zueinander anzuordnen. Ein nicht paralleler, nach radial außen in Längsrichtung betrachtet sich einander nähernder oder auch auseinanderstrebender, Verlauf ist zu bevorzugen, insbesondere, wenn innerhalb einer Gruppe zwischen einem Paar von Diagonal-Streben diese in radialer Richtung sich aneinander annähern, der benachbarte Abstand zwischen zwei Diagonal-Streben der gleichen Gruppe dagegen umgekehrt in radialer Richtung auseinanderläuft, betrachtet in axialer Richtung.

So kann die zur Kreuzungslinie um eine Abstands-Strecke beabstandete gedankliche Verbindungslinie, die durch alle Diagonal-Streben eine Gruppe verläuft, ebenfalls eine gekrümmte Linie sein.

Vorzugsweise ist der Querschnitt einer Diagonal-Strebe frei von Ecken, insbesondere rund oder elliptisch oder frei geformt oder im Fall einer eckigen Umfangskontur frei von Innenecken, und die Umfangskontur bildet ein Polygon, insbesondere ein Rechteck.

Dadurch wird das Anhaften von Material erschwert.

Vorzugsweise sind bei einer nicht quadratischen oder nicht runden Querschnittsfläche die Diagonal-Streben so angeordnet, dass die größte Erstreckung ihrer Querschnittsfläche in Richtung zu den benachbarten Diagonal-Streben der gleichen Gruppe hin gerichtet ist.

Um das Anhaften von Material zu verhindern, besitzen die Oberflächen der Diagonal-Streben keine Sekundär-Struktur und sind insbesondere glatte Flächen.

Unter einer Sekundär-Struktur wird jede Strukturierung verstanden, die der prinzipiellen Formgebung der diagonal-strebe untergeordnet ist, insbesondere kleiner als 2 mm, besser kleiner 1 mm, ist und/oder kleiner ist als der kleinste Durchmesser durch einen Querschnitt der Diagonal-Strebe. Sekundär-Strukturen können dabei entlang der Kanten der Diagonal-Strebe - sofern solche vorhanden sind - finnen- oder klingen-förmige Fortsätze sein oder in einer 3-dimensionalen Gestaltung der Oberfläche der Diagonal-Strebe bestehen.

Stattdessen können Diagonal-Streben durchaus Durchbrüche, insbesondere Durchgangs-Öffnung, in ihrem Verlauf aufweisen, die jedoch vorzugsweise eine Querschnittsfläche besitzen, die mindestens 30%, besser mindestens 50% der Querschnittsfläche der Diagonal-Strebe in diesem Bereich entspricht.

Im Bereich der Verbindung von Elementen des Mischers, beispielsweise zweier benachbarter Diagonal-Streben oder einer Diagonal-Strebe mit einer Diagonal-Strebe des benachbarten Misch-Elementes, insbesondere X-Elementes oder zwischen Diagonal-Strebe und Hüllrohr, sind Innenecken nicht zu vermeiden, auch Innenecken mit einem Innenwinkel von weniger als 90°.

Dennoch sollen Innenecken nicht abgerundet werden, obwohl scharfe Innenecken auf den ersten Blick die Wahrscheinlichkeit von Ablagerungen an Material darin wahrscheinlicher werden lassen, denn es hat sich gezeigt, dass der MischEffekt bei nicht gerundeten, scharfen Innenecken - also mit einem Rundungsradius von weniger als 2 mm, besser weniger als 1,5 mm, besser weniger als 1,0 mm, besser weniger 0,5 mm - die Durchmischung fördert.

Dagegen sollten Innenecken, die von drei oder mehr im Winkel zueinanderstehenden und ineinander übergehenden Flächen, also Kammern, vermieden werden, da diese tatsächlich Ablagerungen von Material stark begünstigen.

Obwohl es sich gezeigt hat, dass möglichst individuell gestaltete X-Elemente innerhalb eines Mischer-Einsatzes die Durchmischung begünstigen, kann es - sei es aus Herstellungsgründen oder aufgrund spezifischer Eigenschaften der zu mischenden Materialien - auch sinnvoll sein, dass die mehreren in axialer Richtung hintereinander vorhandenen Misch-Elemente möglichst ähnlich, insbesondere identisch, sind, beispielsweise wenn ein X- Element ermittelt werden konnte, die für das zu mischende Material besonders vorteilhaft ist.

Unabhängig davon sollten die Diagonal-Streben in ihren Endbereichen mit den Diagonal-Streben des axial benachbarten Misch-Elementes einstückig verbunden sein, um die Stabilität des Mischer-Einsatzes und damit des gesamten Mischers zu verbessern.

Um die Stabilität vor allem des Hüllrohres zu verbessern, ist vorzugsweise auf der Außenseite des Hüllrohres eine, insbesondere einstückig zusammen mit dem Hüllrohr ausgebildete, Stützstruktur aufgebrachte, die insbesondere so ausgebildet ist, dass sie der radialen Dehnung oder Verbiegung des Hüllrohres entgegenwirkt.

Zu diesem Zweck kann eine Stützstruktur das Hüllrohr außen umgebende, insbesondere konzentrisch umgebende, äußere Stützringe aufweisen, die vorzugsweise in einer lotrecht zur axialen Richtung liegenden Ringebene angeordnet sind.

Solche Stützringe können über Stützstege mit dem Hüllrohr einstückig verbunden sein, wobei die Stützstege vorzugsweise in axialer Richtung oder auch schräg dazu verlaufen, insbesondere auch in der Umfangsrichtung in der gleichen Richtung wie die Stützringe verlaufen. Dadurch wird eine hohe zusätzliche Stabilisierung bei geringem Materialverbrauch für den Mischer erreicht.

Dabei kann es zur Verbesserung der Stabilität sinnvoll sein, dass die Stützstruktur nach radial außen offene, aber von außen aus gesehen hinterschnittene Hohlräume aufweist.

Für eine optimale Durchmischung hat es sich ferner als sinnvoll erwiesen, dass die größte Dicke eines Bestandteiles des Mischers, also quer zu dessen größter Erstreckungsrichtung, um maximal 50%, besser maximal 40%, besser maximal 30% von der kleinsten Dicke eines der Bestandteile des Mischers abweicht, also die Bestandteile des Mischers alle im Wesentlichen gleich dick sind.

Dies ergibt eine optimale Stabilität bei geringstem Materialverbrauch bei optimal niedrigem Volumen gerade des Mischer-Einsatzes relativ zum freien Innenraum des Hüllrohres.

Hinsichtlich des Herstellverfahrens wird diese Aufgabe durch ein Verfahren entsprechend Anspruch 15 gelöst.

Vorzugsweise erfolgt dies durch selektiven Material-Auftrag in den einzelnen Schichten oder in einem Pulverbett-Verfahren mit selektivem Aushärten des Materials innerhalb einer Pulverbett-Schicht.

Vorzugsweise liegen die während der Herstellung erzeugten Aufbau-Schichten, die insbesondere ebene Aufbau-Schichten sind und/oder parallel zueinander liegen, in einem um mindestens 10°, besser mindestens 20°, besser mindestens 30° abweichend gewählten Aufbau-Winkel zur axialen Richtung des Mischers.

Vorzugsweise liegen deren Hauptebenen - also die Mittelebenen zwischen den etwa zueinander parallel liegenden, einander gegenüberliegenden größten Außenflächen der Aufbau-Schichten - parallel zur axialen Richtung, also parallel zu einer Mantellinie des Innenumfanges des Hüllrohres.

Für die Vereinfachung des Herstellverfahrens kann es jedoch auch sinnvoll sein, zumindest eine, vorzugsweise alle, Hauptebenen der Aufbau-Schichten parallel zu einer der Verbindungslinien bzw. einer Ebene, in der eine nur 2-dimensional gekrümmte Verbindungslinie liegt, zu wählen und/oder zur Verlaufsrichtung einer der Diagonal-Streben.

Ferner können erfindungsgemäß X-GRID-Elemente auch für das jeweilige Produkt und insbesondere dessen Viskosität und/oder Mischfähigkeit und/oder Aushärtezeit durch computerstützte Simulations-Verfahren jeweils optimiert werden kann, sodass aus dem Optimierungsprogramm direkt Daten für die körperliche Gestaltung des Mischers, insbesondere des Mischer-Einsatzes und dessen X-GRID-Misch-Elementen erstellt und an die den Mischer herstellende Maschine, insbesondere den 3D-Drucker, weitergegeben werden können.

Dadurch sind für jeden Anwendungsfall optimale statische Mischer erzielbar.

### c) Ausführungsbeispiele

Ausführungsformen gemäß der Erfindung sind im Folgenden beispielhaft näher beschrieben. Es zeigen:
- **Figur 1a:**: eine Seitenansicht des Mischers,
- **Figur 1b:**: eine Stirnansicht vom Befestigungs-Ende des Mischers her,
- **Figuren 1c, d:**: Querschnitts-Darstellungen an unterschiedlichen Axialpositionen des Mischers,
- **Figur 2a:**: einen Längsschnitt durch den Mischer enthaltend die Längsmittelachse des im Wesentlichen rotationssymmetrischen Mischers,
- **Figur 2b:**: einen Längsschnitt durch den Mischer, gegenüber der **Figur 2a** betrachtet in Längsrichtung um 90° gedreht und entlang der Linie 2B - 2B gemäß **Figur 2a****,** parallel aber geringfügig abseits der Längsmittelachse des Mischers, wobei aus Übersichtlichkeitsgründen das Hüllrohr des Mischers nicht schraffiert ist,

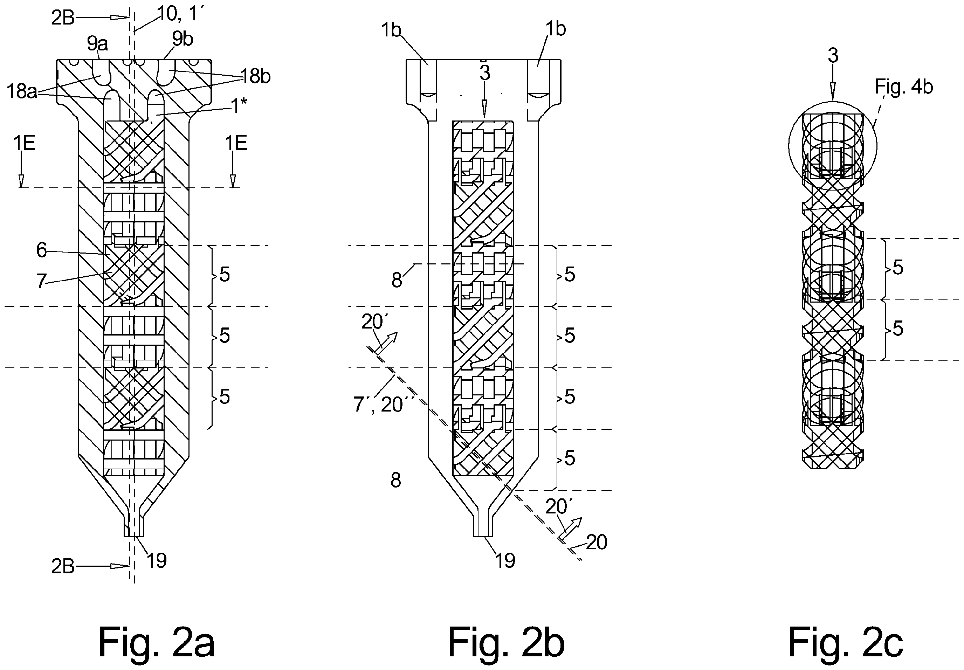

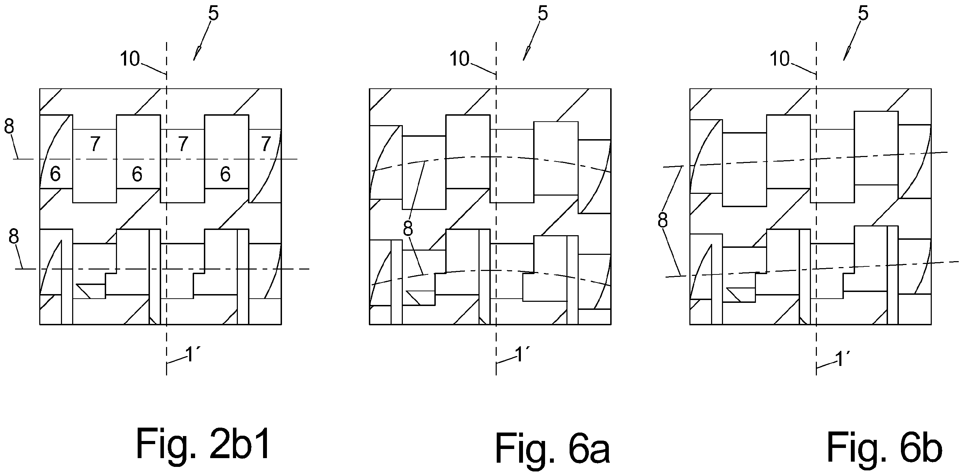

- **Figur 2b1:**: eine Ausschnittvergrößerung aus **Figur 2b****,**
- **Figur 2c:**: eine Seitenansicht nur des Mischereinsatzes mit nicht mehr dargestelltem Hüllrohr, in Blickrichtung gemäß **Figur 2b****,**

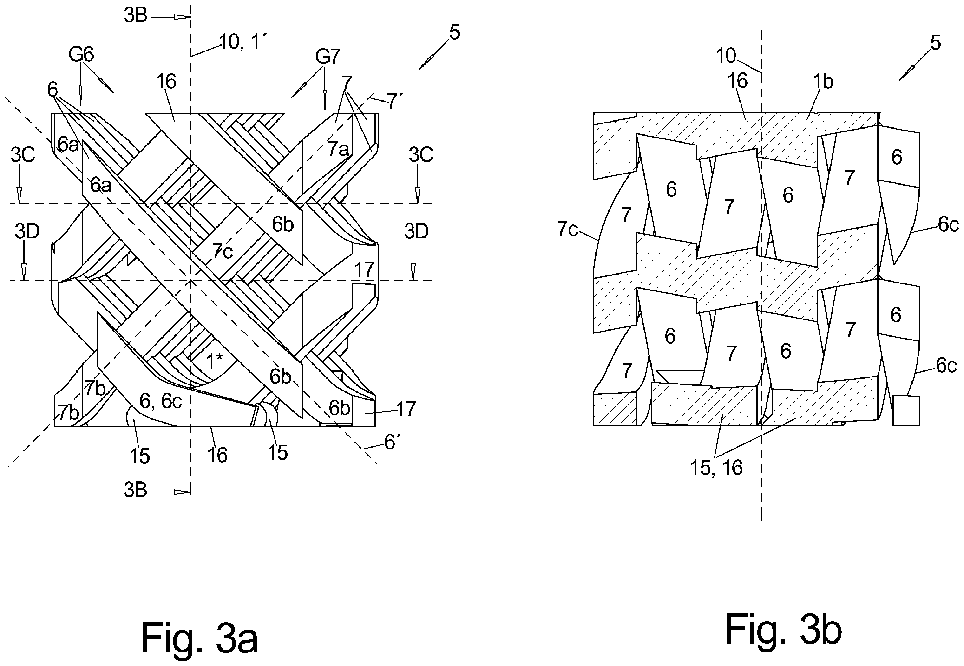

- **Figur 3a:**: ein einzelnes Mischelement in einer Seitenansicht mit leicht perspektivischer Darstellung,
- **Figur 3b:**: ein einzelnes Mischelement geschnitten entlang der Linie 3B-3B in **Figur 3a****,**

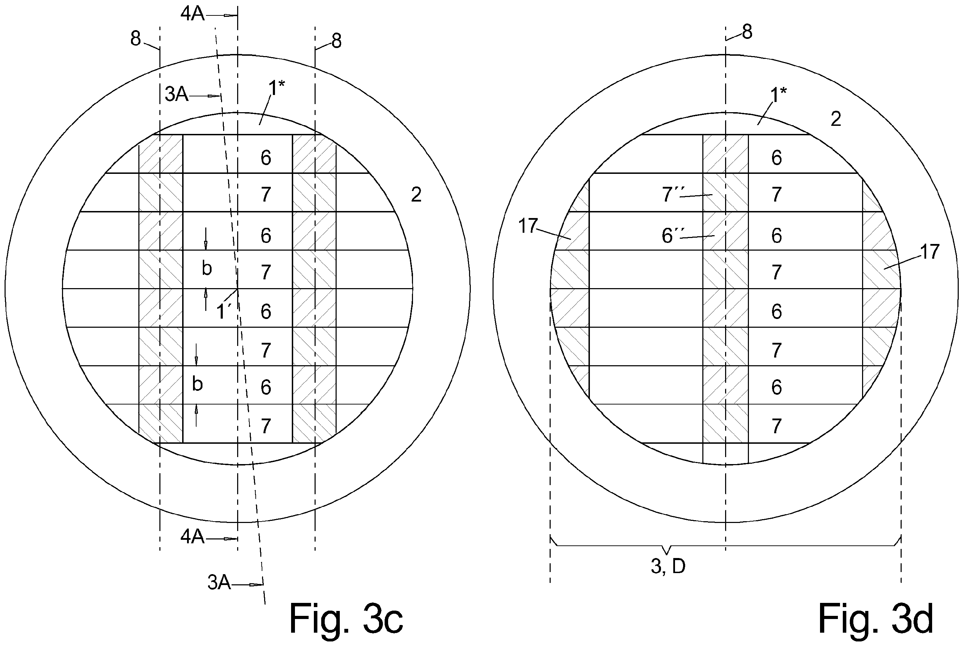

- **Figur 3c:**: das Mischelement der **Figur 3a** geschnitten lotrecht zur axialen Richtung des Mischers entlang der Linie 3C - 3C in **Figur 3a****,**
- **Figur 3d:**: das Mischelement gemäß **Figur 3a** geschnitten lotrecht zur axialen Richtung des Mischers entlang der Linie 3D - 3D in **Figur 3a****,**

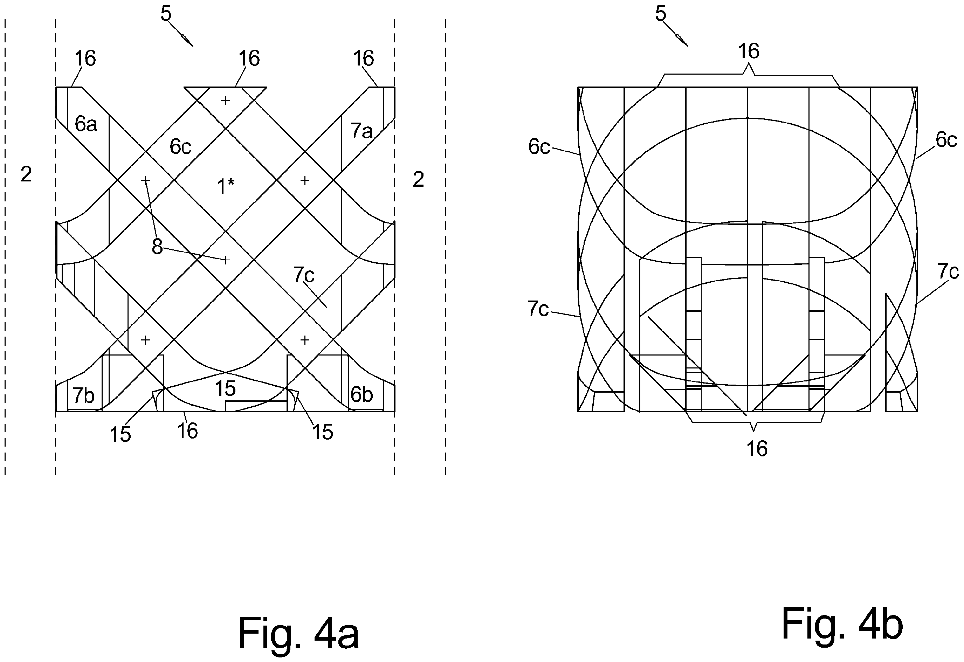

- **Figur 4a:**: eine Seitenansicht des Mischelementes gemäß **Figur 3a****,** jedoch betrachtet exakt in Richtung der geraden Verbindungslinien zwischen den Gruppen von Diagonalstreben,
- **Figur 4b:**: eine Seitenansicht des Mischelementes gemäß **Figur 3a** aus einer um 90° gedrehten Blickrichtung, wie in Figur 2c enthalten,

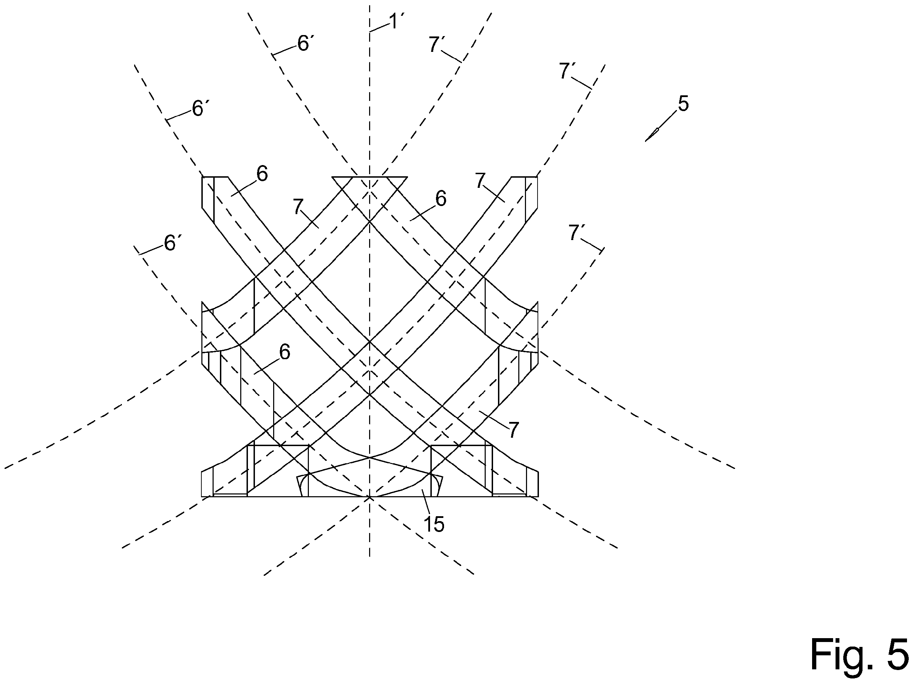

- **Figur 5:**: die Darstellung eines gegenüber den Figuren 3 und 4 abgewandelten Mischelementes in einer Darstellung analog **Figur 4a****,**
- **Figuren 6a, b:**: Darstellungen weiterer Bauformen der Mischelemente, dargestellt in gleicher Blickrichtung wie **Figur 2b****,** jedoch nur in Ausschnitt-Darstellungen für ein Mischelement.

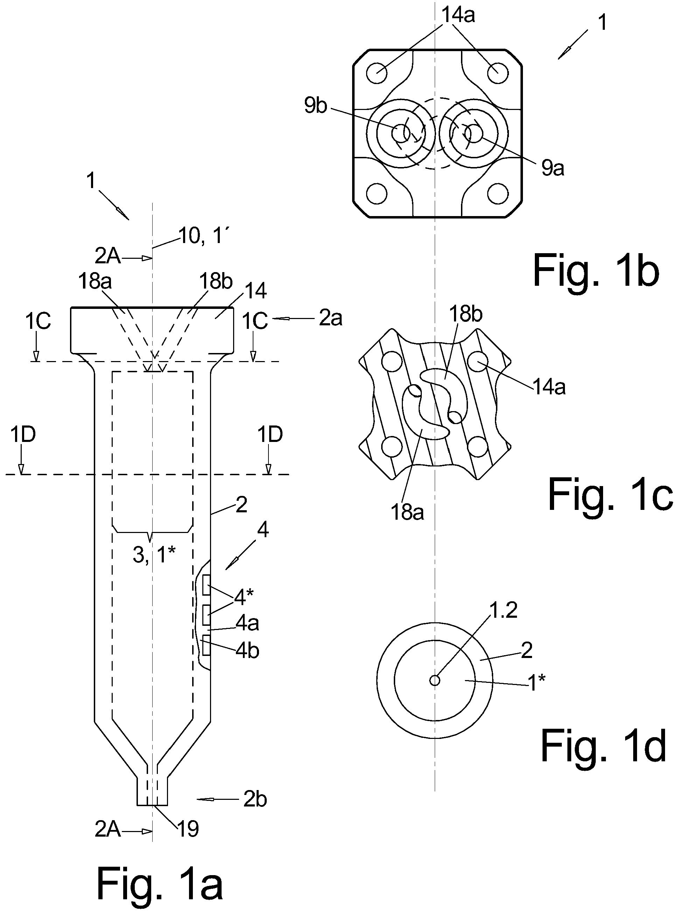

**Figur 1a** zeigt das Hüllrohr 2 von außen in der Seitenansicht, also betrachtet quer zur Längsmittelachse und Verlaufsrichtung 1', damit auch der Längsrichtung 10 des rohrförmigen Hüllrohres 2, welches an seinem Zulauf-seitigen, hier oberen, Ende 2a gegenüber der im übrigen Verlauf runden, rotationssymmetrischen Gestaltung verbreitert ist zu einem etwa viereckigen Befestigungsflansch 14, der die dortige Stirnseite des Innenraumes 1* des Hüllrohres 2 auch verschließt bis auf die beiden Zufluss-Mündungen 9a, b, die sich bzgl. der Längsmittelachse 1' einander gegenüberliegend befinden zum Zuführen der beiden zu mischenden Komponenten.

In den überstehenden Eckbereichen des Befestigungsflansches 14 sind Durchgangsöffnungen als Befestigungs-Durchlässe 14a in der Stirnansicht der **Figur 1b** zu erkennen, die dem Verschrauben an der Unterseite z.B. eines Dosierers dienen.

In dem Befestigungsflansch 14 verlaufen - beginnend an den Zufluss-Mündungen 9a, b - jeweils ein Zufluss-Kanal 18a, b von der Stirnfläche aus bogenförmig gekrümmt um die Längsmittelachse 1' herum und in radialer Richtung nach innen verlaufend zum Innenraum 1* hin, um den dadurch zugeführten Komponenten beim Eintritt in den Innenraum 1* einen Drall um die Längsmittelachse 1', wie in der Schnittdarstellung der **Figur 1c** ersichtlich, zu geben.

**Figur 1d** zeigt einen Querschnitt an einer Längsposition, an der entweder kein Mischer-Einsatz 3 vorhanden ist oder einen Querschnitt unter Weglassen des Mischer-Einsatzes 3.

Am Auslauf-seitigen, unteren Ende verjüngt sich sowohl der kreisförmige Außenumfang des Hüllrohres 2 als auch sein kreisförmiger Innenumfang, der den Innenraum 1* begrenzt, kegelförm ig in Richtung Längsm ittelachse 1'. Dadurch wird der Innenraum 1* bis auf einen sehr dünnen zentrischen Auslaufkanal verjüngt, der in der unteren, verjüngten Stirnfläche des Hüllrohres 2 in einer Auslauf-Mündung 19 mündet, aus der das durchmischte Gemisch austritt.

Wie am besten die Längsschnitte der **Figuren 2a** und **2b** zeigen, befindet sich in dem in **Figur 1a** nur angedeuteten Innenraum 1* mit dem Durchmesser D der sogenannte Mischer-Einsatz 3, der den gleichen Durchmesser D besitzt wie der Innenraum 1* und der aus einer Vielzahl von im Wesentlichen balkenförmigen - geraden oder gekrümmten - quer zur Längsrichtung 10 verlaufenden, Hindernissen in Form von Diagonalstreben 6, 7 besteht, um die die beiden Komponenten von der Einlassseite 2a zur Auslassseite 2b hin herumströmen müssen und sich dabei zunehmend vermischen.

Wie die **Figuren 2** und vor allem **Figur 3a** zeigen, ist der Innenraum 1* etwa zur Hälfte seines Volumens - jedoch etwa gleichmäßig verteilt über seine gesamte axiale Länge - mit solchen Hindernissen gefüllt.

Hinsichtlich des Begriffes Mischer-Einsatz 3 soll klargestellt werden, dass es sich dabei keineswegs um einen nachträglich in das Hüllrohr 2 eingesetzten Einsatz handelt, sondern der Mischer-Einsatz 3 einschließlich aller seiner Einzelteile einstückig zusammen mit dem Hüllrohr 2 ausgebildet und hergestellt ist.

Die **Figuren 2a** bis **2c** lassen erkennen, dass der Mischer-Einsatz 3 in axialer Richtung 10 aus mehreren aufeinanderfolgenden Abschnitten, den miteinander verbundenen, sogenannten Mischelementen 5, besteht, die in diesem Fall vorzugsweise jeweils identisch aufgebaut sind, jedoch jedes Mischelement 5 um die Längsmittelachse 1' um 90° zum in Längsrichtung 10 vorhergehenden Mischelement 5 verdreht angeordnet ist.

Wie am besten die leicht perspektivische Einzeldarstellung eines solchen Mischelementes 5 in **Figur 3a** erkennen lässt, bestehen die Hindernisse aus einzelnen balkenförmigen, in der Seitenansicht der **Figur 3a** mit ihrer Erstreckungsrichtung 6' bzw. 7' schräg zur Längsrichtung 10 verlaufenden, Diagonalstreben 6, 7.

Diese Diagonalstreben 6, 7 bilden in einer bestimmten Seitenansicht auf die Längsmittelachse 1 - wie in **Figur 4a** zu erkennen - ein Gitter aus in diesem Fall von links oben nach rechts unten verlaufenden Diagonalstreben 6 sowie von rechts oben nach links unten verlaufenden Diagonalstreben 7, deren Verlaufsrichtungen 6', 7' in diesem Fall im 90°-Winkel zueinander liegen - zumindest im mittleren Bereich ihre Länge, indem die Verlaufsrichtung ein 6', 7' gerade verlaufen - und wobei je drei solcher Diagonalstreben 6 parallel im Abstand nebeneinander in einer Ebene liegen und ebenso drei Diagonalstreben 7 mit der anderen Verlaufsrichtung parallel nebeneinander beabstandet in einer Ebene liegen.

In Tiefenrichtung der **Figur 4a** sind es jedoch mehrere regelmäßig einander abwechselnde Ebenen von Diagonalstreben 6 einerseits und Diagonalstreben 7 andererseits, sodass diese ein dreidimensionales Gitter bilden, wie in der leicht perspektivischen Ansicht der **Figur 3a** zu erkennen. In der in Blickrichtung der **Figur 4a****,** der Tiefenrichtung, liegen die Diagonalstreben 6, 7 fluchtend in Blickrichtung hintereinander. Die in dieser Blickrichtung hintereinanderliegenden Diagonalstreben bilden jeweils eine Gruppe G6 bzw. eine Gruppe G7, sodass das in der Figur 3a dreidimensional sichtbare Gitter aus je 3 parallel zueinander liegen den Gruppen G6 und je 3 parallel zueinander liegenden Gruppen G7 besteht.

Die in unmittelbar aufeinanderfolgenden Ebenen in Blickrichtung der **Figur 3a** und **4a** liegenden Diagonalstreben 6, 7 kontaktieren einander nicht nur, sondern sind in diesem Kreuzungsbereich einstückig miteinander verbunden und in diesem in Blickrichtung der **Figuren 3** und **4** rechteckigen Verbindungsbereich können in Blickrichtung der **Figur 4a** die Mitten der Querschnitte dieser Verbindungsbereiche in Blickrichtung hintereinander miteinander verbunden werden und ergeben jeweils eine Verbindungslinie 8 in jedem Kreuzungsbereich zweier Gruppen G6, G7. Das dreidimensionale Gitter erscheint also nur dann als zweidimensionales gemäß **Figur 4a** bei Blickrichtung genau in Richtung dieser Verbindungslinien 8, die alle parallel zueinander verlaufen und in diesem Fall gerade sind.

Die **Figuren 3a****,** **4a** zeigen auch, dass betrachtet in dieser Blickrichtung der Verbindungslinien 8 das Gitter quer zur Längsmitte 1' über den gesamten Durchmesser eines solchen Mischelementes 5 und damit des gesamten Einsatzteiles 3 durchgehende Freiräume mit rechteckigem Querschnitt besitzt, die aber quer zur Längsmittelachse 1' und damit der Längsrichtung 10 und somit der Durchströmungsrichtung verlaufen.

Die Enden 6a, 6b bzw. 7a, 7b der Diagonalstreben 6, 7 gehen in einem Übergangsbereich 17 - vorzugsweise, jedoch nicht zwingend alle - in das umgebende Hüllrohr 2 über, wie in **Figur 4a** angedeutet, während in **Figur 3a** das umgebene Hüllrohr 2 aus Übersichtlichkeitsgründen nicht dargestellt ist.

In diesem Übergangsbereich 17 können, wie in **Figur 3a** dargestellt, die Enden der beiden sich dort treffenden Gruppen G6, G7 von Diagonalstreben 6, 7 auch ineinander einstückig übergehen genauso wie in einem Kreuzungsbereich.

**Figur 3a** lässt gut erkennen, dass gerade die in Blickrichtung vordersten und hintersten Querstreben kürzer ausgebildet sein können und ihre radialen Außenflächen 7c an den Enden 6a, 6b, 7a, 7b gegenüber dem mittleren Verlauf, in dem es sich um einen geraden Balken mit rechteckigem Querschnitt handelt, angeschrägt sein können, sodass der Querschnitt sich zu den Enden hin verjüngt, und auch kürzer ausgebildet sein als die dahinterliegenden Diagonalstreben der gleichen Gruppe entsprechend dem in diesem Bereich bereits sehr schräg, also in einem sehr kleinen Zwischenwinkel zur Verlaufsrichtung 6', 7' verlaufenden, tangentialen Richtung des Innenumfanges des Hüllrohres 2.

Die in **Figur 3a** unteren Endbereiche der Diagonalstreben 6, 7 der jeweils untersten Gruppe G6, G7 jedes Mischelementes 5 sind gegenüber ihrem Rest abgewinkelt und verlaufen in einem Winkel von kleiner als 90° zu der Verlaufsrichtung der darüber angeordneten analogen Gruppe.

Die unteren Endbereiche dieser Diagonalstreben laufen dabei fast parallel zu einer radialen Querebene, die lotrecht zur Längsmittelachse 1' liegt, und bilden damit einen relativ großen in axiale Richtung 10 weisenden axialen Zentralkörper 15 mit einer in **Figur 3a** in der Längsmittelachse 1' nach unten weisenden Übergangsbereich 16 auf, der dort in einen entsprechenden oberen Übergangsbereich 16 des nächsten Mischelementes übergeht. Der obere Übergangsbereich 16 ist in Blickrichtung der **Figur 4a** betrachtet jedoch wesentlich schmaler.

Da die in axialer Richtung 10 aufeinanderfolgenden Mischelemente 5 jedoch ebenfalls einstückig miteinander verbunden sind, also die oberen Enden des unteren Mischelementes 5 mit den unteren Enden des darüber befindlichen nächsten Mischelementes 5, würden sich bei zwei schmalen Übergangsbereichen 16, wie hier im oberen Bereich des Mischelementes 5 dargestellt, diese streifenförmigen Übergangsbereiche 16 nur im mittleren Bereich kreuzen, aber dabei nur sehr wenige Diagonalstreben der benachbarten Mischelemente in diesen mittleren Bereich einstückig ineinander übergehen können. Aufgrund des verbreiterten unteren Übergangsbereiches 16 können - abhängig beim Verdrehwinkel zwischen zwei aufeinanderfolgenden Mischelementen 5 um die Längsmittelachse 1' zueinander - selbst bei einem Verdrehwinkel von 90° mehr als die Hälfte der im Übergangsbereich 16 endenden Diagonalstreben mit denen des nächsten nachfolgenden Mischelementes 5 einstückig übergehen.

Bei Bedarf können sowohl am oberen als auch am unteren Ende des Mischelementes 5 solche verbreiterten Übergangsbereiche 16 ausgebildet werden, was jedoch den Strömungswiderstand und die Materialmenge für den Mischer-Einsatz 3 erhöht.

**Figur 3b** zeigt einen Schnitt entlang der Linie 3B - 3B in **Figur 3a****,** also nicht exakt entlang der Verbindungslinien 8 gemäß **Figur 4a** geschnitten, sondern leicht schräg hierzu.

Dementsprechend ergibt sich in **Figur 3b** eine unregelmäßige Schnittdarstellung mit einem oberen Übergangsbereich 16 und einem unteren Übergangsbereich 16, letzterer vorzugsweise in der Form eines unteren Übergangskörpers 15, sowie einem mittleren Kreuzungsbereich, wobei in der **Figur 3b** der obere Übergangsbereich 16 und der mittlere Kreuzungsbereich in der Breite, also ihr annähernd der Blickrichtung der **Figur 3b****,** über die gesamte Breite des Mischelementes 5 durchgehend.

Dazwischen sind die Abschnitte der Diagonalstreben 6, 7 zu erkennen, die in Querrichtung der **Figur 3b** einander berühren und ineinander einstückig übergehen, und es sind ebenfalls die bei den äußersten Lagen von Diagonalstreben gekrümmten Außenflächen 6c, 7c in den Endbereichen der Diagonalstreben der äußersten Lagen zu erkennen analog zur Krümmung des Innenumfangs des umgebenden, auch in **Figur 3b** aus Übersichtlichkeitsgründen nicht dargestellten, Hüllrohres 2.

Die **Figur 3c** zeigt einen Schnitt lotrecht zur Längsrichtung 10 an einer Axialposition, an der zwei Kreuzungsbereiche nebeneinander liegen, wobei ersichtlich ist, dass bei dieser Bauform und in dieser Blickrichtung die Diagonalstreben 6, 7 alle gleich dick sind mit einer Dicke b und betrachtet in dieser axialen Richtung 10 keinen Zwischenrum zueinander benachbarte Diagonalstreben 6, 7 keinen Zwischenraum zueinander einnehmen.

Ferner ist ersichtlich, dass auch in dieser axialen Richtung betrachtet die Verbindungslinien 8 durch die Mitten der Kreuzungsbereiche parallel zueinander verlaufen.

**Figur 3d** zeigt einen Schnitt lotrecht zur Längsrichtung 10 an einer Längsposition, in der sich ein Kreuzungsbereich in der Mitte der Breite des Innenraumes 1* des Hüllrohres 2 befindet, wobei am rechten und linken Ende der Diagonalstreben die Übergangsbereiche 17 der Enden der sich kreuzenden Gruppen G6, G7 zu erkennen sind und deren einstückiger Übergang in das Hüllrohr 2.

Die **Figuren 3c**, d zeigen den Querschnitt 6", 7" der einzelnen Diagonalstreben 6, 7 - die sich wie erkennbar in Richtung der Verbindungslinie 8 einander abwechseln - in einer schrägen Darstellung.

In **Figur 3c** ist die Schnittrichtung der **Figur 4a** mit der Linie 4A - 4A angegeben sowie die Schnittlinie der leicht perspektivischen Darstellung der **Figur 3a** leicht gedreht hierzu um die Längsmittelachse 1' mit der Schnittrichtung der Linie 3A - 3A.

Die **Figur 4b** zeigt dagegen das Mischelement 5 aus **Figur 4a** genau von der Seite, also in einer um 90° gedrehten Blickrichtung, wobei **Figur 4b** lediglich eine Ausschnittvergrößerung aus der Seitenansicht des gesamten Mischer-Einsatzes 3 aus Figur 2c ist.

Auch hier sind die gebogenen Außenflächen 6c, 7c der einzelnen Diagonalstreben 6, 7 in deren Endbereichen gut zu erkennen und ebenso der untere sowie der obere Verbindungsbereich 16 des Mischelementes 5.

Die **Figur 5** zeigt eine davon abgewandelte Bauform eines Mischelementes 5 mit einer Blickrichtung analog zu **Figur 4a****,** bei der in dieser Blickrichtung betrachtet die Verlaufsrichtung in bzw. den Mittellinien entlang des Querschnittes der einzelnen Diagonalstreben nicht gerade sondern gekrümmt sind, in diesem Fall alle Diagonalstreben 6 die gleiche Krümmung besitzen, nämlich konvex nach links unten, und auch die Diagonalstreben 7 alle die gleiche Krümmung besitzen mit Krümmung konvex nach rechts unten und die Krümmungen der Diagonalstreben 6, 7 spiegelbildlich um die Längsmittelachse 1' sind.

Die **Figuren 6a**, b zeigen weitere Bauformen von Mischelementen im Vergleich zu dem die gleiche Blickrichtung aufweisenden Ausschnitt der Figur 2b1 aus der **Figur 2b****,** bei der in dieser Blickrichtung der **Figur 2b** und 2b1 die Verbindungslinien 8 gerade sind und parallel zueinander verlaufen.

Demgegenüber sind die Verbindungslinien 8 in dieser Seitenansicht gekrümmt nach konvex oben verlaufend ausgebildet, bei der Bauform der **Figur 6b** dagegen jeweils gerade und parallel zueinander verlaufend wie in Figur 2b1, jedoch nicht im 90°-Winkel zur Längsrichtung 10, sondern schräg dazu verlaufend.

### BEZUGSZEICHENLISTE

- 1: Mischer
- 1': Längsmittelachse
- 1*: Innenraum
- 2: Hüllrohr
- 2a: zulaufseitiges, oberes Ende
- 2b: auslaufseitiges, unteres Ende
- 3: Mischer-Einsatz
- 4: Stützstruktur
- 4*: Hohlraum
- 4a: Stützring
- 4b: Stützstrebe
- 5: Misch Element
- 6: Diagonal-Strebe
- 6a, b,: Ende, Endbereich
- 6c: radiale Außenfläche
- 6': Verlaufsrichtung
- 7: Diagonal-Strebe
- 7a, b: Ende, Endbereich
- 7c: radiale Außenfläche
- 7': Verlaufsrichtung
- 8: Kreuzungslinie
- 9a, b: Zulauf-Mündung
- 10: Längsrichtung, axiale Richtung von 2 und 1
- 11: 1. Querrichtung
- 12: 2. Querrichtung
- 13: Verbindungslinie
- 14: Befestigungsflansch
- 14a: Befestigungsdurchlass
- 15: axialer Zentralkörper
- 16: Übergangsbereich
- 17: Übergangsbereich
- 18 a, b: Zulauf-Kanal
- 19: Auslauf-Mündung
- 20: Aufbau-Schicht
- 20': Aufbau-Richtung
- 20": Hauptebene

- b: Breite der 6, 7
- D: Durchmesser
- dmin: geringste Dicke
- dmax: größter Dicke
- G6, G7: Gruppe

## Patentansprüche

1. Statischer **Mischer** (1) mit
- einem Mischer-Einsatz (3),
- einem den Mischer-Einsatz (3) umgebenden, in Längsrichtung (10) verlaufenden, um eine Längmittelsachse (1') rotationssymmetrischen runden Hüllrohr (2),
wobei
- der Mischer-Einsatz (3) und das umgebende Hüllrohr (2) einstückig in einem iterativen 3D-Druck-Herstellverfahren zusammen ausgebildet sind, wobei das Hüllrohr (2) an seinem Zulauf-seitigen Ende (2a) zu einem Befestigungsflansch (14) verbreitert ist,
**dadurch gekennzeichnet, dass**
der Befestigungsflansch (14)
die dortige Stirnseite eines Innenraumes (1*) des
Hüllrohres (2) bis auf zwei Zufluss-Mündungen (9a, b) verschießt, die bezüglich der Längsmittelachse (1') einander gegenüberliegen, wobei in dem Befestigungsflansch (14) - beginnend an den Zufluss-Mündungen (9a, b) - jeweils ein Zufluss-Kanal (18a, b) von der Stirnseite aus bogenförmig gekrümmt um die Längsmittelachse (1') herum und in radialer Richtung nach innen zum Innenraum (1*) hin verläuft.

2. Mischer nach Anspruch 1,
**dadurch gekennzeichnet, dass**
der Mischer-Einsatz (3) und das Hüllrohr aus Kunststoff bestehen, und insbesondere der Mischer (1) durch selektiven Materialauftrag oder im Pulverbett-Verfahren durch selektives Aushärten hergestellt ist.

3. Mischer nach einem der vorhergehenden Ansprüche,
**dadurch gekennzeichnet, dass**
- der Mischer-Einsatz (3) mindestens ein Mischelement (5) umfasst,
- welches wenigstens zwei Gruppen (G6, G7) von Diagonal-Streben (6, 7) umfasst,
- wobei entlang einer quer zur Längsrichtung (10) des Hüllrohres (2) verlaufenden Kreuzungslinie (8) betrachtet die beiden Gruppen (G1, G2) sich kreuzen,
- indem entlang der Kreuzungslinie (8) hintereinander die Diagonal-Streben (6, 7) sowohl der einen Gruppe (G6) als auch der anderen Gruppe (G7) angeordnet sind und fortlaufend entlang der Kreuzungslinie (8) miteinander verbunden sind,
- wobei entlang der Kreuzungslinie (8) insbesondere auf eine Diagonal-Strebe (6) der einen Gruppe (G6) eine Diagonal-Strebe (7) der anderen Gruppe (G7) folgt und umgekehrt.

4. Mischer nach Anspruch 3,
**dadurch gekennzeichnet, dass**
- wenigstens ein Teil der Diagonal-Streben (6, 7) beabstandet zum umgebenden Hüllrohr (2) endet,
- insbesondere frei endet und mit keinem anderen Element des Mischer-Einsatzes (3) oder des Hüllrohres (2) verbunden ist.

5. Mischer nach einem der vorhergehenden Ansprüche,
**dadurch gekennzeichnet, dass**
- die beiden Zufluss-Mündungen (9a, b) im zuflussseitigen, oberen Ende (2a) des Hüllrohres (2) an der gleichen Axial-Position angeordnet sind,
- insbesondere in Längsrichtung (10) höchstens um 3 mm, besser höchstens um 2 mm, besser um höchstens 1 mm differieren
und/oder
- insbesondere in Längsrichtung (10) höchstens um 3 %, besser höchstens um 2 %, besser höchstens um 1 %, der Länge des Hüllrohres (2) differieren.

6. Mischer nach einem der Ansprüche 3-5,
**dadurch gekennzeichnet, dass**
- die Summe der in Längsrichtung (10) betrachteten Breiten (b) der Diagonal-Streben (6, 7), insbesondere gemessen in Richtung der Kreuzungslinie (8), zweier sich kreuzender Gruppen (G6, G7) größer als 95 % des, insbesondere in der gleichen Richtung gemessenen, inneren freien Durchmessers (D) das Hüllrohres (2) ist,
- besser größer als 96 %, besser größer als 97 % ist.

7. Mischer nach einem der Ansprüche 3-6,
**dadurch gekennzeichnet, dass**
die Diagonal-Streben (6, 7)
- in ihrer größten Erstreckungsrichtung, ihrer Verlaufsrichtung (6', 7'), gekrümmt sind
und/oder
- die Kreuzungslinie (8) gekrümmt ist
und/oder
- die Diagonal-Streben (6, 7) einer Gruppe (z.B. G6) nicht parallel zueinander verlaufen
und/oder
- eine um eine definierte Abstands-Strecke in Verlaufsrichtung (6', 7') der Diagonal-Streben (6, 7) von der Kreuzungslinie (8) entfernt die einzelnen Diagonal-Streben (6, 7) einer Gruppe (z.B. G6) gedanklich verbindenden Verbindungslinie (13) eine gekrümmte Linie ist.

8. Mischer nach einem der Ansprüche 3-7,
**dadurch gekennzeichnet, dass**
die Diagonal-Streben (6, 7) eine Querschnittsfläche (6", 7") besitzen, deren Umfang
- frei von Ecken ist, insbesondere rund oder elliptisch ist
oder
- ein Polygon, insbesondere ein Rechteck, ist,
und/oder
- die größte Erstreckung der Querschnittsfläche (6", 7") in Richtung zu den benachbarten Diagonal-Streben (6, 7) der gleichen Gruppe (z.B. G6) verläuft.

9. Mischer nach einem der Ansprüche 3-8,
**dadurch gekennzeichnet, dass**
- die Oberflächen der Diagonal-Streben (6, 7), insbesondere aller Diagonal-Streben (6, 7), keine Sekundär-Struktur aufweisen,
- insbesondere glatte Flächen sind.

10. Mischer nach einem der Ansprüche 3-9,
**dadurch gekennzeichnet, dass**
die Diagonal-Streben (6, 7) so geformt und/oder zueinander angeordnet sind, dass keine Innenräume im Mischer (1) entstehen, die von drei oder mehr im Winkel zueinanderstehenden und sich schneidenden Flächen begrenzt werden.

11. Mischer nach einem der Ansprüche 3-10,
**dadurch gekennzeichnet, dass**
im Winkel zueinanderstehende, insbesondere ebene, ineinander übergehende Oberflächen, die Bestandteil verschiedener Diagonal-Streben (6, 7) oder einer Diagonal-Strebe (6, 7) einerseits und des Hüllrohres (2) andererseits sind, im Fall eines Innen-Winkels einen Rundungsradius von weniger als 2 mm, insbesondere von weniger als 1,5 mm, insbesondere von weniger als 1,0 mm, insbesondere von weniger als 0,5 mm, besitzen.

12. Mischer nach einem der Ansprüche 3-11, wobei
- der Mischer-Einsatz (3) in Längsrichtung (10) hintereinander mehrere Mischelemente (5) aufweist,
**dadurch gekennzeichnet, dass**
- die Diagonal-Streben (6, 7), insbesondere in ihren Endbereichen, eines Mischelementes (5) mit den Diagonal-Streben (6, 7), des benachbarten Mischelementes (5) einstückig verbunden sind,
- insbesondere alle Mischelemente (5) des Mischer-Einsatzes (3) eine identische Struktur aufweisen.

13. Mischer nach einem der Ansprüche 3-12,
- wobei in Längsrichtung (10) betrachtet die in Längsrichtung (10) aufeinander folgenden Kreuzungslinien (8) jeweils einen Zwischenwinkel von mindestens 5°, besser mindestens 10°, besser mindestens 15°, besser mindestens 20°, besser mindestens 30° zueinander einnehmen
**dadurch gekennzeichnet, dass**
- in Längsrichtung (10) betrachtet die Kreuzungslinien (8), insbesondere alle Kreuzungslinien (8), gekrümmt sind,
- insbesondere mit einer in ihrem Verlauf wechselnden Krümmungs-Richtung.

14. Mischer nach einem der vorhergehenden Ansprüche,
**dadurch gekennzeichnet, dass**
die größte Material-Dicke (dmax) der Bestandteile des Mischers (1) um maximal 50 %, besser maximal 40 %, besser maximal 30 % von der kleinsten Dicke (dmin) der Bestandteile des Mischers (1) abweicht.

15. **Verfahren** zum Herstellen eines statischen Mischers (1), bestehend aus einem Mischer-Einsatz (3) und einem den Mischer-Einsatz (3) umgebenden Hüllrohr (2),
nach einem der vorhergehenden Ansprüche,
wobei
- der einstückige Mischer (1) in dem iterativen Herstellverfahren, insbesondere schichtweise, hergestellt wird,
- insbesondere mittels 3D-Druck hergestellt wird,
- insbesondere durch selektiven Materialauftrag oder im Pulverbett-Verfahren durch selektives Aushärten hergestellt wird.

16. Verfahren nach Anspruch 15, wobei
- die Aufbau-Schichten (20) insbesondere ebene Schichten sind und/oder parallel zueinander liegen,
**dadurch gekennzeichnet, dass**
- die Hauptebenen (20") der Aufbau-Schichten (20) in einem von 90° um mindestens 10°, besser mindestens 20°, besser mindestens 30° abweichenden Aufbau-Winkel (α) zur Längsrichtung (10) gewählt werden.

17. Verfahren nach einem der vorhergehenden Verfahrens-Ansprüche, **dadurch gekennzeichnet, dass**
die Hauptebenen (20") der Aufbau-Schichten (20) parallel zu
- einer Mantellinie des Innenumfanges des Hüllrohres (2) liegend gewählt werden,
- einer Verbindungslinie (8) liegend gewählt werden,
- einer Verlaufsrichtung (6', 7') einer der Diagonal-Streben (6, 7) liegend gewählt werden.

## Claims

1. Static **mixer** (1), comprising
- a mixer insert (3),
- a round cladding tube (2) that surrounds the mixer insert (3), extends in the longitudinal direction (10), and is rotationally symmetrical about a central longitudinal axis (1')
- the mixer insert (3) and the surrounding cladding tube (2) being formed together in one piece in an iterative 3D printing production method,
the cladding tube (2) being widened at its intake-side end (2a) to form a fastening flange (14),
**characterised in that**
the fastening flange (14) closes the end face, there, of an interior (1*) of the cladding tube (2), apart from two inflow mouths (9a, b) which are opposite one another with respect to the central longitudinal axis (1'), in each case one inflow channel (18a, b) extending, in the fastening flange (14), starting at the inflow mouths (9a, b), from the end face, around the central longitudinal axis (1') in an arcuately curved manner, and inwards in the radial direction, towards the interior (11).

2. Mixer according to claim 1,
**characterised in that**
the mixer insert (3) and the cladding tube consist of plastics material, and in particular the mixer (1) is produced by selective material deposition or in the powder bed method by selective hardening.

3. Mixer according to either of the preceding claims,
**characterised in that**
- the mixer insert (3) comprises at least one mixing element (5)
- which comprises at least two groups (G6, G7) of diagonal struts (6, 7),
- the two groups (G1, G2) intersecting, viewed along an intersection line (8) extending transversely to the longitudinal direction (10) of the cladding tube (2),
- **in that** the diagonal struts (6, 7) both of one group (G6) and of the other group (G7) are arranged one behind the other along the intersection line (8) and are continuously interconnected along the intersection line (8),
- in particular a diagonal strut (6) of one group (G6) being followed by a diagonal strut (7) of the other group (G7), and vice versa, along the intersection line (8).

4. Mixer according to claim 3,
**characterised in that**
- at least some of the diagonal struts (6, 7) end at a distance from the surrounding cladding tube (2),
- in particular ends free and is not connected to any other element of the mixer insert (3) or of the cladding tube (2).

5. Mixer according to any of the preceding claims,
**characterised in that**
- the two inflow mouths (9a, b) are arranged at the same axial position in the inflow-side, upper end (2a) of the cladding tube (2),
- in particular differ in the longitudinal direction (10) at most by 3 mm, preferably at most by 2 mm, preferably at most by 1 mm,
and/or
- in particular differ in the longitudinal direction (10) at most by 3%, preferably at most by 2%, preferably at most by 1%, of the length of the cladding tube (2).

6. Mixer according to any of claims 3-5,
**characterised in that**
- the sum of the widths (b) of the diagonal struts (6, 7), viewed in the longitudinal direction (10), in particular measured in the direction of the intersection line (8), of two intersecting groups (G6, G7) is greater than 95% of the inner free diameter (D), in particular measured in the same direction, of the cladding tube (2),
- preferably is greater than 96%, preferably greater than 97%.

7. Mixer according to any of claims 3-6,
**characterised in that**
the diagonal struts (6, 7)
- are curved in their largest extension direction, their progression direction (6', 7'), and/or
- the intersection line (8) is curved, and/or
- the diagonal struts (6, 7) of a group (e.g. G6) do not extend in parallel with one another,
and/or
- a connecting line (13) that notionally connects the individual diagonal struts (6, 7) of one group (e.g. G6), at a defined spacing distance from the intersection line (8) in the progression direction (6', 7') of the diagonal struts (6, 7), is a curved line.

8. Mixer according to any of claims 3-7,
**characterised in that**
the diagonal struts (6, 7) have a cross-sectional area (6", 7"), the periphery of which
- is free of corners, in particular is round or elliptical,
or
- is a polygon, in particular a rectangle,
and/or
- the largest extension of the cross-sectional area (6", 7") extends in the direction towards the adjacent diagonal struts (6, 7) of the same group (e.g. G6).

9. Mixer according to any of claims 3-8,
**characterised in that**
- the surfaces of the diagonal struts (6, 7), in particular of all the diagonal struts (6, 7), do not have any secondary structures,
- in particular are smooth surfaces.

10. Mixer according to any of claims 3-9,
**characterised in that**
the diagonal struts (6, 7) are shaped and/or arranged relative to one another in such a way that no interiors result in the mixer (1) which are delimited by three or more surfaces that are at an angle to one another and intersect with one another.

11. Mixer according to any of claims 3-10,
**characterised in that**
surfaces that are at an angle with respect to one another, and are in particular flat and transition into one another, which surfaces are a component of different diagonal struts (6, 7) or a diagonal strut (6, 7) on the one hand and of the cladding tube (2) on the other hand, have, in the case of an internal angle, a radius of curvature of less than 2 mm, in particular of less than 1.5 mm, in particular of less than 1.0 mm, in particular of less than 0.5 mm.

12. Mixer according to any of claims 3-11,
- the mixer insert (3) comprising a plurality of mixing elements (5) one behind the other in the longitudinal direction (10),
**characterised in that**
- the diagonal struts (6, 7), in particular in their end regions, of one mixing element (5) are integrally connected to the diagonal struts (6, 7) of the neighbouring mixing element (5),
- in particular all the mixing elements (5) of the mixer insert (3) have an identical structure.

13. Mixer according to any of claims 3-12,
- in which, viewed in the longitudinal direction (10), the intersection lines (8) that follow one another in the longitudinal direction (10), each assume an intermediate angle of at least 5°, preferably at least 10°, preferably at least 15°, preferably at least 20°, preferably at least 30°, relative to one another,
**characterised in that**,
- viewed in the longitudinal direction (10), the intersection lines (8), in particular all the intersection lines (8), are curved,
- in particular having a curvature direction that alternates in its progression.

14. Mixer according to any of the preceding claims,
**characterised in that**
the greatest material thickness (dmax) of the components of the mixer (1) deviates by at most 50%, preferably at most 40%, preferably at most 30%, from the smallest thickness (dmin) of the components of the mixer (1).

15. **Method** for producing a static mixer (1), consisting of a mixer insert (3) and a cladding tube (2) surrounding the mixer insert (3), according to any of the preceding claims,
wherein
- the integral mixer (1) is produced in the iterative production method, in particular in a layered manner,
- in particular is produced by means of 3D printing,
- in particular is produced by selective material deposition or in the powder bed method by selective hardening.

16. Method according to claim 15,
- the add-on layers (20) in particular being flat layers and/or being in parallel with one another,
**characterised in that**
- the main planes (20") of the add-on layers (20) are selected at an add-on angle (α) that deviates from 90° by at least 10°, preferably at least 20°, preferably at least 30°, relative to the longitudinal direction (10).

17. Method according to any of the preceding claims,
**characterised in that**
the main planes (20") of the add-on layers (20) are selected so as to be located in parallel with
- a surface line of the inner periphery of the cladding tube (2),
- a connecting line (8),
- a progression direction (6', 7') of one of the diagonal struts (6, 7).

## Revendications

1. Mélangeur statique (1), comprenant
- un insert de mélangeur (3),
- un tube enveloppe (2) rond entourant l'insert de mélangeur (3), s'étendant dans la direction longitudinale (10) et présentant une symétrie de révolution autour d'un axe médian longitudinal (1'),
dans lequel
- l'insert de mélangeur (3) et le tube enveloppe (2) qui l'entoure sont formés ensemble d'un seul tenant dans un procédé itératif de fabrication par impression 3D,
- le tube enveloppe (2) est élargi à son extrémité (2a) côté arrivée pour former une bride de fixation (14),
**caractérisé en ce que**
la bride de fixation (14) ferme la face frontale d'un espace intérieur (1*) du tube enveloppe (2) à l'exception de deux embouchures d'arrivée (9a, b) qui sont opposées l'une à l'autre par rapport à l'axe médian longitudinal (1'), et
dans la bride de fixation (14) - en partant des embouchures d'arrivée (9a, b) - un canal d'arrivée respectif (18a, b) s'étend depuis la face frontale en étant incurvé en forme d'arc autour de l'axe médian longitudinal (1') et en direction radiale vers l'intérieur vers l'espace intérieur (1*).

2. Mélangeur selon la revendication 1,
**caractérisé en ce que**
l'insert de mélangeur (3) et le tube enveloppe sont en matière plastique, et en particulier le mélangeur (1) est fabriqué par application sélective de matière ou par un procédé à lit de poudre par durcissement sélectif.

3. Mélangeur selon l'une des revendications précédentes,
**caractérisé en ce que**
- l'insert de mélangeur (3) comprend au moins un élément de mélange (5),
- qui comprend au moins deux groupes (G6, G7) d'entretoises diagonales (6, 7),
- les deux groupes (G1, G2) se croisant, vus le long d'une ligne de croisement (8) s'étendant transversalement à la direction longitudinale (10) du tube enveloppe (2),
- du fait que, le long de la ligne de croisement (8), les entretoises diagonales (6, 7) d'un groupe (G6) et de l'autre groupe (G7) sont disposées les unes derrière les autres et sont reliées entre elles de manière continue le long de la ligne de croisement (8),
- sachant que, le long de la ligne de croisement (8), une entretoise diagonale (6) d'un groupe (G6) est en particulier suivie d'une entretoise diagonale (7) de l'autre groupe (G7), et vice versa.

4. Mélangeur selon la revendication 3,
**caractérisé en ce que**
- au moins une partie des entretoises diagonales (6, 7) se termine à distance du tube enveloppe (2) qui les entoure,
- se termine en particulier librement et n'est reliée à aucun autre élément de l'insert de mélangeur (3) ou du tube enveloppe (2).

5. Mélangeur selon l'une des revendications précédentes,
**caractérisé en ce que**
- les deux embouchures d'arrivée (9a, b) dans l'extrémité supérieure (2a) du tube enveloppe (2), côté arrivée, sont disposées à la même position axiale,
- diffèrent en particulier au maximum de 3 mm, de préférence au maximum de 2 mm, de préférence encore au maximum de 1 mm, dans la direction longitudinale (10)
et/ou
- diffèrent en particulier de 3 % au maximum, de préférence de 2 % au maximum, de préférence encore de 1 % au maximum, de la longueur du tube enveloppe (2), dans la direction longitudinale (10).

6. Mélangeur selon l'une des revendications 3 à 5,
**caractérisé en ce que**
- la somme des largeurs (b) des entretoises diagonales (6, 7), considérées dans la direction longitudinale (10), en particulier mesurées dans la direction de la ligne de croisement (8), de deux groupes (G6, G7) qui se croisent est supérieure à 95 % du diamètre intérieur libre (D) du tube enveloppe (2), en particulier mesuré dans la même direction,
- de préférence supérieure à 96 %, de préférence encore supérieure à 97 %.

7. Mélangeur selon l'une des revendications 3 à 6,
**caractérisé en ce que**
les entretoises diagonales (6, 7)
- sont incurvées dans leur direction d'extension maximale, leur direction d'allongement (6', 7'),
et/ou
- la ligne de croisement (8) est incurvée,
et/ou
- les entretoises diagonales (6, 7) d'un groupe (par exemple G6) ne sont pas parallèles entre elles,
et/ou
- une ligne de liaison (13) reliant, sur le plan imaginaire, les entretoises diagonales (6, 7) individuelles d'un groupe (par exemple G6), à une distance définie par rapport à la ligne de croisement (8) dans la direction d'extension (6', 7') des entretoises diagonales (6, 7), est une ligne incurvée.

8. Mélangeur selon l'une des revendications 3 à 7,
**caractérisé en ce que**
les entretoises diagonales (6, 7) ont une surface de section transversale (6", 7") dont le périmètre
- est dépourvu de coins, en particulier est rond ou elliptique,
ou
- est un polygone, en particulier un rectangle,
et/ou
- la plus grande extension de la surface de section transversale (6", 7") s'étend en direction des entretoises diagonales (6, 7) voisines du même groupe (par exemple G6).

9. Mélangeur selon l'une des revendications 3 à 8,
**caractérisé en ce que**
- les surfaces des entretoises diagonales (6, 7), en particulier de toutes les entretoises diagonales (6, 7), ne présentent pas de structure secondaire et
- sont en particulier des surfaces lisses.

10. Mélangeur selon l'une des revendications 3 à 9,
**caractérisé en ce que**
les entretoises diagonales (6, 7) sont formées et/ou disposées les unes par rapport aux autres de manière à ne pas créer d'espaces intérieurs dans le mélangeur (1) qui seraient délimités par trois surfaces ou plus formant un angle entre elles et se coupant.

11. Mélangeur selon l'une des revendications 3 à 10,
**caractérisé en ce que**
des surfaces formant un angle, en particulier planes, qui se prolongent mutuellement et qui font partie de différentes entretoises diagonales (6, 7) ou d'une entretoise diagonale (6, 7) d'une part et du tube enveloppe (2) d'autre part, ont, dans le cas d'un angle intérieur, un rayon de courbure inférieur à 2 mm, en particulier inférieur à 1,5 mm, en particulier inférieur à 1,0 mm, en particulier inférieur à 0,5 mm.

12. Mélangeur selon l'une des revendications 3 à 11, dans lequel
- l'insert de mélangeur (3) présente plusieurs éléments de mélange (5) situés les uns derrière les autres dans la direction longitudinale (10),
**caractérisé en ce que**
- en particulier dans leurs zones d'extrémité, les entretoises diagonales (6, 7) d'un élément de mélange (5) sont reliées d'un seul tenant aux entretoises diagonales (6, 7) de l'élément de mélange (5) voisin,
- en particulier tous les éléments de mélange (5) de l'insert de mélangeur (3) présentent une structure identique.

13. Mélangeur selon l'une des revendications 3 à 12,
- dans lequel, vu dans la direction longitudinale (10), les lignes de croisement (8) qui se suivent dans la direction longitudinale (10) forment chacune un angle intermédiaire d'au moins 5°, de préférence d'au moins 10°, de préférence d'au moins 15°, de préférence d'au moins 20°, de préférence encore d'au moins 30° entre elles,
**caractérisé en ce que**
- vu dans la direction longitudinale (10), les lignes de croisement (8), en particulier toutes les lignes de croisement (8), sont incurvées,
- en particulier avec une direction de courbure qui change sur leur extension.

14. Mélangeur selon l'une des revendications précédentes,
**caractérisé en ce que**
la plus grande épaisseur de matériau (dmax) des composants du mélangeur (1) s'écarte au maximum de 50 %, de préférence au maximum de 40 %, de préférence encore au maximum de 30 % de la plus petite épaisseur (dmin) des composants du mélangeur (1).

15. Procédé de fabrication d'un mélangeur statique (1) constitué d'un insert de mélangeur (3) et d'un tube enveloppe (2) entourant l'insert de mélangeur (3),
selon l'une des revendications précédentes,
dans lequel
- le mélangeur monobloc (1) est fabriqué par un procédé itératif de fabrication en particulier couche par couche,
- en particulier est fabriqué par impression 3D,
- en particulier est fabriqué par application sélective de matière ou par un procédé à lit de poudre par durcissement sélectif.

16. Procédé selon la revendication 15, dans lequel
- les couches de structure (20) sont en particulier des couches planes et/ou sont parallèles entre elles,
**caractérisé en ce que**
- les plans principaux (20") des couches de structure (20) sont choisis selon un angle de structure (α) par rapport à la direction longitudinale (10) qui s'écarte de 10° au minimum, de préférence de 20° au minimum, de préférence de 30° au minimum par rapport à un angle de 90°.

17. Procédé selon l'une des revendications précédentes,
**caractérisé en ce que**
les plans principaux (20") des couches de structure (20) sont choisis de manière à se trouver parallèlement
- à une génératrice de la circonférence intérieure du tube enveloppe (2),
- à une ligne de jonction (8),
- à une direction d'extension (6', 7') de l'une des entretoises diagonales (6, 7).
